# EUROPEAN PATENT APPLICATION

(11) **EP 1 720 342 A2**
(43) Date of publication of application: **08.11.2006**
(21) Application number: 06252341.0
(22) Date of filing: 03.05.2006
(51) Int. Cl.: H04N 5/235

(54) **Wireless communication terminal having function of automatically controlling intensity of radiation of light emitting unit and method thereof**

(30) Priority: 03.05.2005 KR 20050037085
(71) Applicant: Pantech&Curitel Communications, Inc., Yeongdeungpo-gu, Seoul (KR)
(72) Inventor: Choi, Sung-Hwan, Yeongdeungpo-gu Seoul (KR)
(74) Representative: Mounteney, Simon James

(57) **Abstract**

A wireless communication terminal having a function of automatically controlling an intensity of radiation of a flash, and a method thereof. The wireless communication terminal includes: a camera module for capturing an image of a subject through an auto-focusing function; a controller for outputting a charge control signal corresponding to a focus distance value of a focusing lens that gives the maximum sharpness of an image based on calculation in the camera module, and transferring an activation signal according to an image signal; a power supply for supplying electric power according to the charge control signal to the controller; and a light emitting unit for producing an instantaneous flash of light according to the activation signal from the controller by receiving the electric power from the power supply.

## Description

### Field of the Invention

The present invention relates to a wireless communication terminal having a function of automatically controlling an intensity of radiation of a light emitting unit such as a flash, and a method thereof; and, more particularly, to a wireless communication terminal having a function of automatically controlling an intensity of radiation of a light emitting unit such as a flash using a focus distance value of a focusing lens which provides an maximum sharpness of input image when an auto-focusing function is activated, and a method thereof.

### Description of Related Arts

A wireless communication terminal is a portable terminal capable of transmitting/receiving voice, text and image data through a wireless communication network. Such a wireless communication terminal may be a mobile communication terminal, a personal communication service (PCS) terminal, a personal digital assistant (PDA), a smart phone, a next generation mobile terminal for IMT-2000, and a wireless local area network (LAN) terminal.

Generally, a flash for photographing is a device that produces an instantaneous flash of light similar to a sun light for helping to take a photograph in a dark indoor place or at night. Using such a flash, a constant brightness and high image quality can be obtained, and fast moving objects in a dark place can be photographed.

Also, the flash is used not only as a main light source but also as a supplementary light source with a natural light or an artificial light to obtain pictures with superior image quality. The flash is classified into an external flash and an internal flash according to a mounting location of a flash at a wireless communication terminal.

The flash is also classified into a manual flash and an auto flash. The manual flash radiates light with a constant intensity without regard to the intensity of radiation of the surroundings. However, the auto flash automatically controls intensity of radiation according to the intensity of radiation of the surroundings and radiates light according to the regulated intensity of radiation.

Conventional wireless communication terminals having a light emitting unit such as the flash do not have a function to control the intensity of radiation of the light emitting unit. So, the light emitting unit generates light with constant intensity of radiation as much as the charged current whenever an activation condition of the light emitting unit is satisfied. Accordingly, it is very difficult to obtain normal quality images and the electric power consumption increases.

In order to overcome such a drawback, some of conventional communication terminals have a function to control the intensity of radiation of the light emitting unit. Such a function controls the intensity of radiation of the light emitting unit according to the user's setting. Therefore, a user must subjectively determine the intensity of radiation of the flash based on various light environment conditions whenever a user takes a picture.

Therefore, a user has a hard time to control the intensity of radiation of the light emitting unit to capture an image with normal quality according to the conventional method of controlling the intensity of radiation of the flash.

### Summary of the Invention

It is, therefore, an object of the present invention to provide a wireless communication terminal having a function of automatically controlling intensity of radiation of a light emitting unit using a focus distance value of a focusing lens which gives an maximum sharpness of an input image in order to capture the best quality image without manually controlling the intensity of radiation of the flash.

In accordance with an aspect of the present invention, there is provided a wireless communication terminal including: a camera module for capturing an image of a subject through an auto-focusing function; a controller for outputting a charge control signal corresponding to a focus distance value of a focusing lens that gives the maximum sharpness of an image based on calculation in the camera module, and transferring an activation signal according to an image signal; a power supply for supplying electric power according to the charge control signal to the controller; and a light emitting unit for producing an instantaneous flash of light according to the activation signal from the controller by receiving the electric power from the power supply.

In accordance with an aspect of the present invention, there is also provided a method of automatically controlling intensity of radiation of a flash in a wireless communication terminal, the method including the steps of: calculating a sharpness of an image according to a focus distance value of a focusing lens when an auto-focusing function is activated; obtaining a focus distance value of the focusing lens that gives an maximum sharpness of the image when the maximum sharpness is calculated; generating a charge control signal corresponding to the obtained focus distance value of the focusing lens; and producing a flash of light using a current charged corresponding to the generated charge control signal.

### Brief Description of the Drawings

The above and other objects and features of the present invention will become better understood with regard to the following description of the preferred embodiments given in conjunction with the accompanying drawings, in which:
Fig. 1 is a block diagram illustrating a wireless communication terminal having a function of automatically controlling intensity of radiation of a flash in accordance with a preferred embodiment of the present invention; and
Fig. 2 is a flowchart of a method of automatically controlling intensity of radiation of a flash in accordance with a preferred embodiment of the present invention.

### Detailed Description of the Invention

Hereinafter, a wireless communication terminal having a function for automatically controlling a flash and a method thereof in accordance with a preferred embodiment of the present invention will be described in more detail with reference to the accompanying drawings.

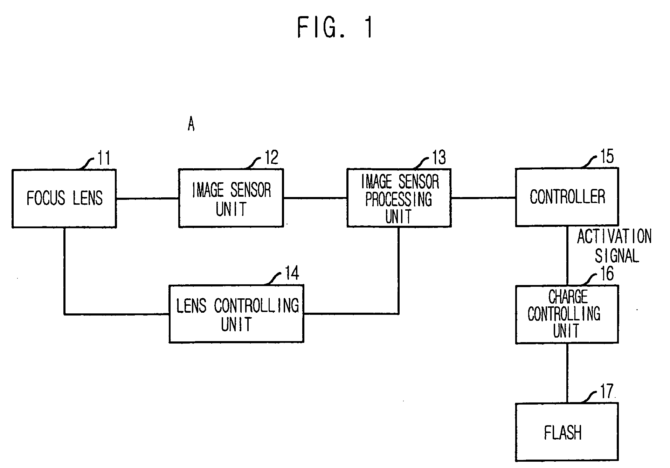

Fig. 1 is a block diagram illustrating a wireless communication terminal having a function of automatically controlling intensity of radiation of a light emitting unit in accordance with a preferred embodiment of the present invention.

Referring to Fig. 1, the wireless communication terminal having a function of automatically controlling intensity of radiation of a light emitting unit in accordance with a preferred embodiment of the present invention includes: a focusing lens 11 for receiving an image of a subject and bringing the subject into a focus by shifting itself forwardly and backwardly in a direction of an optical axis in response to a lens driving unit 14; an image sensor unit 12 for capturing the image of the subject through the focusing lens 11; a image signal processing unit 13 for calculating the sharpness of the image through an auto focus logic, generating a control signal corresponding to a predetermined focus distance value of the focusing lens 11 and transferring the generated control signal to the lens driving unit 14; the lens driving unit 14 for shifting the focusing lens 11 forwardly and backwardly in a direction of an optical axis according to the control signal from the image signal processing unit 13; a controller 15 for monitoring the image signal processing unit 13, generating a charge control signal according to the focus distance value of the focusing lens 11 which gives the maximum sharpness of the image, transferring the charge control signal to a charge controlling unit 16, and transferring an activation signal to a light emitting unit 17 in response to an image signal from a user; a charge controlling unit 16 for supplying charge current according to quantity of current corresponding to the charge control signal from the controller 15; and the light emitting unit 17 for producing an instantaneous flash of light using the charged current according to the activation signal from the controller 15.

The light emitting unit 17 may be a flash or a light emitting diode for producing the flash of the light for obtaining a superior image quality.

Herein, the wireless communication terminal according to the present embodiment does not include a CODEC if the controller 15 is a mobile station Modem 61XXX series. However, if the controller 15 is a mobile station Modem older than 61XXX series, the wireless communication terminal according to the present embodiment further includes a CODEC. Herein, the CODEC encodes the focus distance value of the focusing lens 11 from the image signal processing unit 13, and transfers the encoded focus distance value to the controller 15.

The controller 15 and the image signal processing unit 13 are communicated each other through IIC(Inter Integrated Circuit) communication.

The focusing lens 11, the image sensor unit 12, the image signal processing unit 13 and the lens driving unit 14 are form a camera module.

The lens driving unit 14 forwardly or backwardly moves the focusing lens 11 in a direction of an optical axis. Forward direction and backward direction of the optical axis denote a direction of incident light and an opposite direction thereof. In a general way, in order to adjust a focus of an image to be captured in a manual camera, a focus adjusting ring is rotated in a clockwise direction or a counter clockwise direction to move the focusing lens in the forward direction and the backward direction. The direction of an optical axis denotes such forward direction and backward direction. In case of an auto-focusing camera, the focus is automatically controlled through calculating a sharpness of input image through the auto-focusing logic which is well-known to those skilled in the art. Therefore, detail description thereof is omitted.

The image sensor unit 12 includes a charge coupled device (CCD) and a complementary metal oxide semiconductor (CMOS).

The sharpness is calculated using an edge of image of a target subject obtained through the image sensor unit 12. The auto focus logic is used to calculate the sharpness.

The sharpness is a numeral value such as modulation transfer function (MTF), or a contrast ratio. If the numeral value is large, the sharpness is high, and if the numeral value is small, the sharpness is low. Since photographing is influenced by peripheral environment such as weather generally, different sharpness can be calculated although a same subject is photographed at same location.

Meanwhile, the controller 15 monitors the image signal processing unit 13 when the auto-focusing function is activated. When the image signal processing unit 13 calculates the maximum sharpness, the controller 15 read the focus distance value of the focusing lens 11 and uses the read focus distance value to control the intensity of radiation of the light emitting unit 17. If the focus distance value of the focusing lens 11 is larger than a predetermined threshold value, the controller 15 determines that the subject is close to the wireless communication terminal. Accordingly, the controller 15 reduces the intensity of radiation of the flash 17. On the contrary, if the focus distance value of the focusing lens 11 is smaller than the threshold value, the controller 15 determines that the subject is far from the wireless communication terminal. Therefore, the controller 15 increases the intensity of radiation of the light emitting unit 17.

For example, the controller 15 controls the light emitting 17 to radiate light with 70% of the maximum intensity of radiation when the focus distance value of the focusing lens 11 is same to the threshold value. If the focus distance value of the focusing lens 11 is reduced 10% below from the threshold value, the controller 15 controls the light emitting unit 17 to radiate light with 80% of the maximum intensity of radiation. If the focus distance value of the focusing lens 11 is reduced 10% to 30% below from the threshold value, the controller 15 controls the light emitting unit 17 to radiate light with 90% of the maximum intensity of radiation. Furthermore, if the focus distance value of the focusing lens 11 is reduced more than 30% below from the threshold value, the controller 15 controls the light emitting unit 17 to radiate light with the maximum intensity of radiation.

On the contrary, if the focus distance value of the focusing lens 11 increases less than 10% from the threshold value, the light emitting unit 17 radiates light with 60% of maximum intensity of radiation, and if the focus distance value of the focusing lens 11 increases more than 10% and less than 30% from the threshold value, the light emitting unit 17 radiates light with 50% of maximum intensity of radiation. Furthermore, if the focus distance value of the focusing lens 11 increases more than 30% from the threshold value, the light emitting unit 17 radiates light with 40% of maximum intensity of radiation.

Herein, the above conditions are applied when the activation conditions of the light emitting unit 17 are satisfied. The intensity of radiation of the light emitting unit 17 is in proportional to quantity of current applied to the light emitting unit 17.

A time of radiating the light through the light emitting unit 17 can be controlled. For example, if the focus distance value of the focusing lens 11 is about the predetermined threshold value, the light emitting unit 17 radiates light with 70% of the maximum intensity of radiation for 0.4 second. If the focus distance value of the focusing lens 11 is reduced to 10% of the threshold value, the light emitting unit 17 radiates light with 80% of the maximum intensity of radiation for 0.5 second. Also, if the focus distance value of the focusing lens 11 is reduced to more than 10% and less than 30% of the threshold value, the light emitting unit 17 radiates light with 90% of maximum intensity of radiation for 0.6 second. Furthermore, if the focus distance value of the focusing lens 11 is reduced to more than 30% of the threshold value, the light emitting unit 17 radiates light with 100% of the maximum intensity of radiation for 0.7 second.

On the contrary, if the focus distance value of the focusing lens 11 increases less than 10% of the threshold value, the light emitting unit 17 radiates light with 60% of maximum intensity of radiation for 0.3 second. Also, if the focus distance value of the focusing lens 11 increases more than 10% and less than 30% of the threshold value, the flash 17 radiates light with 50% of maximum intensity of radiation for 0.2 second. Furthermore, if the focus distance value of the focusing lens 11 increases more than 30% of the threshold value, the light emitting unit 17 radiates light with 40% of maximum intensity of radiation for 0.1 second.

Meanwhile, the intensity of radiation of the light emitting unit 17 can be controlled modifying existing software or circuit design without additional electric components.

When the auto control mode for the intensity of radiation is not set, the intensity of radiation and the time of the flash can be set by a user in the present embodiment.

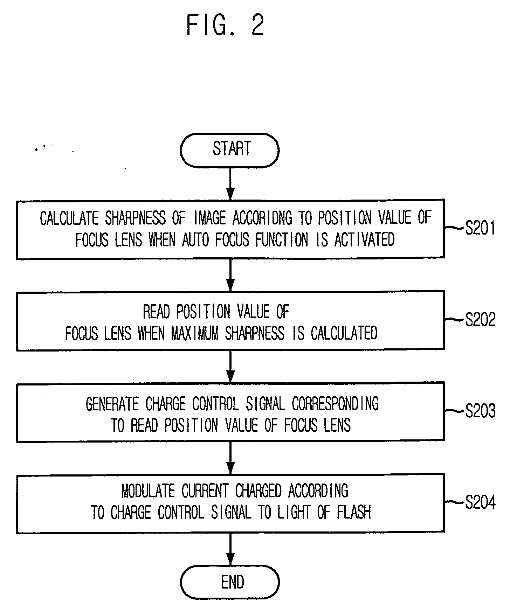

Fig. 2 is a flowchart of a method of automatically controlling intensity of radiation of a light emitting unit in accordance with a preferred embodiment of the present invention.

Referring to Fig. 2, in order to clearly describe the method according to the present embodiment, it assumes that the auto-focusing mode of the wireless communication terminal is turned on and the camera module of the wireless communication terminal captures an image of a target subject. And, peripheral environment is satisfied by the activation condition of the light emitting unit.

According to activation of the auto-focusing function, the sharpness of input image of the target subject is obtained by the image sensor unit 12 according to the focus distance value of the focusing lens 11 at step S201. The well-know auto-focusing logic is used to calculate the sharpness.

Then, when the maximum sharpness is calculated, the focus distance value of the focusing lens 11 is read at step S202. That is, the sharpness is calculated according to the focus distance value of the focusing lens 11 through the auto-focusing logic and the distance value of the focusing lens 11 giving the maximum sharpness of the input image is read. Herein, a version of the controller 15 is low, the focus distance value of the focusing lens 11 is encoded through a CODEC.

After then, a charge control signal is generated according to the read focus distance value of the focusing lens 11 at step S203.

After generating, the light emitting unit 17 produces the flash of light using the charged current according to activation signal from the user to a light of flash at step S204. Herein, the amount of the charged current is decided by the charge control signal.

As described above, the intensity of radiation of the light emitting unit is controlled using the focus distance value of the focusing lens that gives the maximum sharpness of the input image when the auto-focusing function is activated in the present invention. Therefore, the best image can be simply and easily obtained without additionally controlling the intensity of radiation of the light emitting unit.

The present application contains subject matter related to Korean patent application No. KR 2004-0106264, filed in the Korean patent office on December 15, 2004, the entire contents of which being incorporated herein by reference.

While the present invention has been described with respect to certain preferred embodiments, it will be apparent to those skilled in the art that various changes and modifications may be made without departing from the spirits and scope of the invention as defined in the following claims.

## Claims

1. A wireless communication terminal comprising:
a camera module for capturing an image of a subject through an auto-focusing function;
a controller for outputting a charge control signal corresponding to a focus distance value of a focusing lens that gives the maximum sharpness of an image based on calculation in the camera module, and transferring an activation signal according to an image signal;
a power supply for supplying electric power according to the charge control signal to the controller; and
a light emitting unit for producing an instantaneous flash of light according to the activation signal from the controller by receiving the electric power from the power supply.

2. The wireless communication terminal as recited in claim 1, wherein if the focus distance value of the focusing lens is greater than a predetermined threshold value, the controller determines that the subject is close to the focusing lens and reduces the intensity of radiation of the light emitting unit and if the focus distance value is smaller than the predetermined threshold value, the controller determines that the subject is far from the focusing lens and increases the intensity of radiation of the flash.

3. The wireless communication terminal as recited in claim 2, wherein the charge control signal includes the intensity of radiation and the duration of radiating the flash of light through the light emitting unit.

4. The wireless communication terminal as recited in claim 3, wherein the camera module includes:
a focusing lens for receiving an image of the subject, and adjusting a focus of the subject by being forwardly and backwardly shifted in a direction of an optical axis;
an image sensor unit for capturing the received image through the focusing lens;
an image sensor processing unit for calculating a sharpness of the image at the image sensor unit, and generating a control signal corresponding to a predetermined focus distance value of the focusing lens; and
a lens driving unit for receiving the generated control signal and shifting the focusing lens forwardly and backwardly in a direction of an optical axis according to the received control signal.

5. The wireless communication terminal as recited in claim 3, further comprising a CODEC for encoding the focus distance value of the focusing lens.

6. A method of automatically controlling intensity of radiation of a flash in a wireless communication terminal, the method comprising the steps of:
calculating a sharpness of an image according to a focus distance value of a focusing lens when an auto-focusing function is activated;
obtaining a focus distance value of the focusing lens that gives an maximum sharpness of the image when the maximum sharpness is calculated;
generating a charge control signal corresponding to the obtained focus distance value of the focusing lens; and
producing a flash of light using a current charged corresponding to the generated charge control signal.

7. The method as recited in claim 6, wherein in the generating of the charge control signal, if the focus distance value of the focusing lens is greater than a threshold value, the intensity of radiation is reduced by determining that the subject is closed to the focusing lens, and if the focus distance value of the focusing lens is smaller than the threshold value, the intensity of radiation increases by determining that the subject is far from the focusing lens.

8. The method as recited in claim 7, wherein the charge control signal includes information about the intensity of radiation and the duration of radiating the flash of light.

9. The method as recited in claim 8, further comprising the step of encoding the focus distance value of the focusing lens.
